# EUROPÄISCHE PATENTSCHRIFT

(11) **EP 1 522 152 B1**
(45) Veröffentlichungstag und Bekanntmachung des Hinweises auf die Patenterteilung: **19.10.2005**
(21) Anmeldenummer: 03763675.0
(22) Anmeldetag: 01.07.2003
(51) Int. Cl.: H04B 3/56, H04B 3/58

(54) **ANORDNUNG ZUR LEITUNGSGEBUNDENEN ÜBERTRAGUNG VON DATEN ÜBER EIN STROMNETZWERK**
SYSTEM FOR CARRYING OUT THE LINE TRANSMISSION OF DATA OVER AN ELECTRIC NETWORK
SYSTEME DE TRANSMISSION FILAIRE DE DONNEES PAR UN RESEAU DE COURANT

(30) Priorität: 16.07.2002 DE 10232303
(43) Veröffentlichungstag der Anmeldung: 13.04.2005
(73) Patentinhaber: Power Plus Communications AG, 68163 Mannheim (DE)
(72) Erfinder: FLICKER, Jürgen, 69259 Wilhelmsfeld (DE); HEILER, Wolfgang, 68799 Reilingen (DE)
(74) Vertreter: Kesselhut, Wolf
(86) Internationale Anmeldenummer: PCT/EP2003/006969
(87) Internationale Veröffentlichungsnummer: WO 2004/008656

(56) Entgegenhaltungen:
- WO-A-00/49726
- US-A- 4 890 089
- US-A- 5 949 327
- US-B1- 6 252 755
- US-B1- 6 396 392

## Beschreibung

Die Erfindung betrifft eine Anordnung zur leitungsgebundenen Übertragung von Daten über ein Stromnetzwerk umfassend ein Niederspannungs-Stromnetz und ein Mittelspannungs-Stromnetz, gemäß dem Oberbegriff von Anspruch 1.

Auf dem Gebiet der Telekommunikation werden heutzutage für die Übertragung von elektronischen Daten zwischen Rechnern, beispielsweise im Bereich des Internets, neben speziell für diese Zwecke ausgebildeten herkömmlichen Datenleitungen in zunehmendem Maße die Leitungen des öffentlichen Stromnetzes verwendet.

Bei dieser in Fachkreisen als "Powerline" System oder "Powerline Communications" (PLC) bezeichneten Technologie werden Datensignale neben der üblichen 50 Hz Spannung auf Stromleitungen als Hochfrequenzsignale aufmoduliert. Hierbei liegen die Pegel der verwendeten Signalspannungen in der Regel im Bereich von weniger als einem Volt und weisen Frequenzen im Bereich von 1,5 bis 30 MHz auf.

Die Verbindung zwischen Geräten des Powerline-Systems, die in einem vermaschten Stromnetz angeschlossen sind, erfolgt dabei nach den Prinzipien eines Datennetzes mit einem Bus als Medium. Da die hochfrequenten Signale mit zunehmender Entfernung mehr und mehr gedämpft werden, ist der Einsatz von Zwischenverstärkern erforderlich, die in Fachkreisen auch als "Repeater" bezeichnet werden. Die Zwischenverstärker werden dabei an Verteilervorrichtungen des sogenannten Niederspannungs-Stromnetzes mit Spannungen von ca. 230 V, wie z.B. Trafostationen, Straßenverteilern oder Hausanschlusskästen angebracht. Sie greifen die hochfrequenten Signale - nachfolgend als Hochfrequenzsignale bezeichnet - von den Leitungen ab, verstärken diese selektiv und koppeln die verstärkten Hochfrequenzsignale anschließend wieder auf die Leitung.

Bei der Verbreitung des Powerline-Systems besteht das Problem, dass in der Regel jede der Trafostationen, die eine größere Anzahl von Gebäuden oder Straßenzügen mit elektrischem Strom versorgen, über eine Telekommunikationsleitung, z.B. eine vergleichsweise teure Glasfaserleitung, mit dem Datennetzwerk verbunden werden muss, welches wiederum für die Ankopplung an einen zugeordneten Server-Rechner sorgt, welcher z.B. den Zugang zum Internet bereitstellt. Da der Ausbau des Datennetzwerks - häufig auch TK Backbone genannt - erhebliche Kosten verursacht, werden in der Praxis in zunehmendem Maße bereits bestehende Leitungsverbindungen des Mittelspannungs-Stromnetzes für die Übertragung der Daten genutzt, was jedoch aufgrund der verwendeten elektrischen Wechselspannung von ca. 10 bis 30 KV besonders ausgestaltete Ein- und Auskoppeleinheiten für die Signale erfordert.

Darüber hinaus ist es für eine Einkopplung der aus dem Mittelspannungs-Stromnetz ausgekoppelten Hochfrequenzsignale bei einer Zugrundelegung der bei Niederspannungs-Stromnetzen in der Praxis angewandten Verfahrensweise erforderlich, die Hochfrequenzsignale über eine aktiv arbeitende Powerline-Datenübertragungeinrichtung in Datenpakete zu konvertieren, und diese Datenpakete anschließend z.B. über ein LAN (Lokal Area Network) innerhalb einer Trafostation an eine weitere aktive Powerline-Datenübertragungseinrichtung in Form eines vergleichsweise teuren aktiven Signalkonverters zu übertragen, der die Datenpakete als verstärkte Hochfrequenzsignale anschießend selektiv wieder in das Niederspannungsstromnetz eingekoppelt.

Demgemäß ist es eine Aufgabe der vorliegenden Erfindung, eine Anordnung zur leitungsgebundenen Übertragung von Daten über ein Stromnetzwerk umfassend ein Niederspannungs-Stromnetz und ein Mittelspannungs-Stromnetz zu schaffen, welche den Aufwand an erforderlichen aktiv arbeitenden Powerline-Datenübertragungseinrichtungen vermindert.

Diese Aufgabe wird gemäß der Erfindung durch die Merkmale von Anspruch 1 gelöst.

Weitere Merkmale der Erfindung sind in den Unteransprüchen beschieben.
Gemäß der Erfindung werden bei einer Anordnung zur leitungsgebundenen Übertragung von Daten über ein kombinierte Stromnetzwerk, welches aus einem Mittelspannspannungs-Stromnetz mit einer Spannung im Bereich von 10 bis 30 KV und einem mit diesem über eine Trafostation gekoppelten Niederspannungs-Stromnetz mit einer Spannung im Bereich von 230/400 V besteht, die von einem zentralen Rechner durch ein Telekommunikationsnetzwerk übertragenen Daten über eine erste Powerline-Datenübertragungseinrichtung in Form einer bekannten Zentraleinheit (CU) in Hochfrequenzsignale konvertiert.

Die Hochfrequenzsignale werden anschließend über eine erste Mittelspannungs-Koppeleinheit in das Mittelspannungs-Stromnetz eingekoppelt. Die Koppeleinheit ist dabei ein im Stande der Technik bekanntes Bauteil, welches z.B. von zahlreichen namenhaften Herstellern, wie z.B. ABB, Efen etc., in unterschiedlichen Ausführungen gefertigt und vertrieben wird.

Die Hochfrequenzsignale werden nach ihrer Übertragung über das Mittelspannungs-Stromnetz durch eine zweite Mittelspannungs-Koppeleinheit aus dem Mittelspannungs-Stromnetz ausgekoppelt, und anschließend in erfindungsgemäßer Weise ohne eine weitere Konvertierung in Datenpakete über eine passive und kostengünstige Niederspannungs-Einkoppeleinheit direkt als Hochfrequenzsignal in das elektrische Niederspannungs-Stromnetz eingekoppelt.

Das Niederspannungs-Stromnetz überträgt die Hochfrequenzsignale in der für Powerline-Systeme üblichen und bekannten Art und Weise vorzugsweise unter Einsatz von selektiv arbeitenden aktiven Zwischenverstärkern (Repeatern) bis zu den jeweiligen Haushalten. Dort werden die Hochfrequenzsignale über eine zweite aktive Powerline-Datenübertragungseinrichtung in Form eines aktiven Modems wieder zurück in Datenpakete umgewandelt, die über eine geeignete Datenleitung einem Anwender-Rechner, z.B. einem herkömmlichen PC, zur Weiterverarbeitung durch eine geeignete Software, z.B. einen Internet-Browser, zugeführt werden.

Durch die erfindungsgemäße Anordnung ergibt sich der Vorteil, dass ein bereits bestehendes Mittelspannungs-Stromnetz als Übertragungsmedium innerhalb des Powerline-Datennetzes eingesetzt werden kann, wodurch insbesondere in Ballungsgebieten in kostengünstiger Weise eine vergleichsweise hohe Netzabdeckung erhalten werden kann, da insbesondere keine oder nur sehr wenige zusätzliche Glasfaserverbindungen verlegt werden müssen, um weitere Trafostationen zu erreichen, von denen aus die Datenverbindung zu den einzelnen Straßenzügen in bekannter Weise auf der Basis der Powerline-Technologie über das Niederspannungs-Stromnetz hergestellt wird.

Gemäß einer weiteren Ausführungsform der Erfindung ist der Ausgang der zweiten Mittelspannungs-Koppeleinheit mit einem Zwischenverstärker oder Repeater verbunden, der die von der zweiten Koppeleinheit bereitgestellten Hochfrequenzsignale von der Leitung abgreift, selektiv verstärkt und anschließend wieder in diese einkoppelt. Derartige Zwischenverstärker sind bekannt und werden bei Powerline-Systemen bereits seit langem für die Verstärkung und Weiterleitung der Hochfrequenzsignale an den stromführenden Leitungen des Niederspannungs-Stromnetzes eingesetzt. Durch diese Art der Ausgestaltung der erfindungsgemäßen Anordnung wird der Vorteil erhalten, dass kostengünstige und in großer Stückzahl erhältliche erprobte Komponenten an anderer Stelle ebenfalls eingesetzt werden können, um die Hochfrequenzsignale selektiv zu verstärken, insbesondere dann, wenn die Abstände zwischen den Anschlüssen für das Mittelspannungs-Stromnetz und das Niederspannungs-Stromnetz in einer Trafostation zu groß sind, und demgemäß der Signalpegel zu stark abfällt, um eine Verbindung ohne Zwischenverstärker zu betreiben.

Hierbei ist der Zwischenverstärker oder Repeater vorzugsweise über eine T-förmige Verbindungsleitung mit der zweiten Mittelspannungs-Koppeleinheit verbunden, was gemäß der bevorzugten Ausführungsform der Erfindung über eine bekannte BNC-Buchse und zugehörige bekannte BNC-Kabel erfolgt, über die vorzugsweise auch die zweite Mittelspannungs-Koppeleinheit mit der Niederspannungs-Einkoppeleinheit verbunden ist.

Der Einsatz von bekannten BNC-Buchsen und Kabeln für die elektrische Verbindung zwischen der zweiten Mittelspannungs-Koppeleinheit und dem Repeater, bzw. der Niederspannungs-Einkoppeleinheit eröffnet die Möglichkeit einer kostengünstigen und verlustarmen Übertragung der Hochfrequenzsignale. Die BNC-Kabel und BNC-Buchsen werden vorzugsweise ebenfalls zur Übertragung der Hochfrequenzsignale zwischen der ersten Powerline-Datenübertragungseinrichtung (Central Unit) und der ersten Mittelspannungs-Koppeleinheit verwendet, bei denen es sich vorzugsweise um dieselben Bauteile wie bei der zweiten Mittelspannungs-Koppeleinheit und der zweiten Powerline-Datenübertragungseinrichtung handelt.

Die Niederspannungs-Einkoppeleinheit ist vorzugsweise über einen Grobschutz mit der Phase des Niederspannungs-Stromnetzes verbunden, der aus einem spannungsabhängigen Widerstand (Varistor) und einen mit diesem in Reihe geschalteten Überspannungsableiter besteht. Der Varistor kann z.B. eine effektive Spannung Ueff. von 300 V aufweisen, und der Überspannungsalbleiter ist vorzugsweise ein bekanntes Halbleiterbauteil, welches die Werte 10VDC; 10kA/10A besitzt. Der Überspannungsableiter dient hierbei als Funkenstrecke, die die erfindungsgemäße Anordnung bei einer auftretenden Überspannung, z.B. aufgrund eines Blitzeinschlags in das Niederspannungs-Stromnetz, schützt. Der Varistor ist hingegen ein bekanntes Halbleiterbauteil, welches im Falle einer Überspannung durchschaltet, und hierdurch den Funkenüberschlag am Überspannungsableiter ermöglicht.

Gemäß einer weiteren Ausführungsform der Erfindung umfasst die Niederspannungs-Einkoppeleinheit weiterhin einen ersten Koppelkondensator, beispielsweise ein Typ Y1-Kondensator, mit einer Kapazität von 10 nF (500 V AC), der mit seinem einen Ende mit einer ersten Phase des Niederspannungs-Stromnetzes sowie dem Varistor verbunden ist. Ein zweiter Koppelkondensator mit vorzugsweise der gleichen Kapazität ist mit seinem einen Ende mit einer zweiten Phase oder dem PEN (kombinierter Neutralleiter und Schutzleiter) des Niederspannungs-Stromnetzes verbunden, welches eine Spannung zwischen z.B. 230 V und 400 V haben kann.

Die freien Enden des ersten und zweiten Koppelkondensators sind bei einer weiteren Ausgestaltung der erfindungsgemäßen Anordnung mit einem bekannten 1:1 Übertrager gekoppelt, der für eine galvanische Trennung zwischen dem Niederspannungs-Stromnetz und dem BNC-Leitungsnetz, welches die zweite Mittelspannungs-Koppeleinheit sowie den Repeater mit der erfindungsgemäßen Mittelspannungs-Einkoppeleinheit verbindet, sorgt, und der im Falle einer Überspannung, die durch den Grobschutz nicht abgehalten werden kann durchbrennt, um eine Weiterleitung der Überspannung zu verhindern.

Der erste und zweite Koppelkondensator dienen hierbei zusammen mit dem Übertrager als Hochpasselemente, die die 50 Hz Spannung des Niederspannungsnetzes dämpfen und von der Seite der Mittelspannungs-Koppeleinheit, bzw. einem angeschlossenen Modem, fernhalten, die an die erfindungsgemäße Niederspannungs-Einkoppeleinheit angeschlossen sind.

Weiterhin kann es vorgesehen sein, dass die Niederspannungs-Einkoppeleinheit einen Feinschutz umfasst, der den Übertrager mit der zweiten Mittelspannungs-Koppeleinheit verbindet, um einen noch größeren Schutz gegen Überspannungsschäden zu erhalten. Die Niederspannungs-Einkoppeleinheit besitzt hierbei vorzugsweise eine BNC-Buchse, deren Pole elektrisch mit den beiden Polen des Feinschutzes verbunden sind, welch letzter vorzugsweise eine erste in Reihe geschaltete Suppressordiode und Schottky-Diode sowie eine zweite, parallel hierzu in Reihe geschaltete Suppressordiode und Schottky-Diode umfasst. Die Durchlassrichtung für den elektrischen Strom ist bei der ersten Anordnung von in Reihe geschalteten ersten Suppressor- und Schottkydioden in erfindungsgemäßer Weise umgekehrt zur Strom-Durchlassrichtung der zweiten Suppressor- und Schottkydiode.

Die ersten und zweiten Suppressordioden sind z.B. bekannte Bauteile mit der Bezeichnung BAT46; und die ersten und zweiten Schottkydioden besitzen z.B. die Werte V_{BR}=11V; V_{WM} = 9V ; I_{D} = 5 Mikroampere.

Wenn in der Anmeldung von einer Richtung gesprochen wird, in der die Hochfrequenzsignale oder die Datenpakete übertragen, bzw. ein- oder ausgekoppelt werden, so dient dies lediglich zum besseren Verständnis der erfindungsgemäßen Schaltungsanordnung. Im Detail betrachtet ist der Datenfluss- und auch der Signalfluss bei der erfindungsgemäßen Schaltungsanordnung nicht auf eine Richtung beschränkt, sondern erfolgt vorzugsweise in beiden Richtungen, so dass mit der erfindungsgemäßen Anordnung sowohl ein Hochladen (Upload), als auch ein Herunterladen (Download) von Daten über den zentralen Rechner möglich ist.

Die Erfindung wird nachfolgend mit Bezug auf die Zeichnungen beschrieben.

In den Zeichnungen zeigen:
- Fig. 1: eine schematische Darstellung einer erfindungsgemäßen Anordnung mit Server-Rechner, Telekommunikations-Backbone, Mittelspannungs-Stromnetz, Niederspannungs-Stromnetz, Kopplungseinheiten und Anwender-Rechner,
- Fig. 2: eine schematische Übersichtsdarstellung einer erfindungsgemäßen Niederspannungs-Einkoppeleinheit zum Anschluss an ein Niederspannungs-Stromnetz mit zwei Anschlüssen,
- Fig. 3: eine Detailansicht der Einkoppeleinheit von Fig. 2 mit den darin enthaltenen elektronischen Bauteilen,
- Fig. 4: eine schematische Übersichtsdarstellung einer weiteren Ausführungsform einer erfindungsgemäßen Niederspannungs-Einkoppeleinheit zum Anschluss an ein Niederspannungs-Stromnetz mit drei Anschlüssen,
- Fig. 5: eine Detailansicht der Einkoppeleinheit von Fig. 4 mit den darin enthaltenen elektronischen Bauteilen.

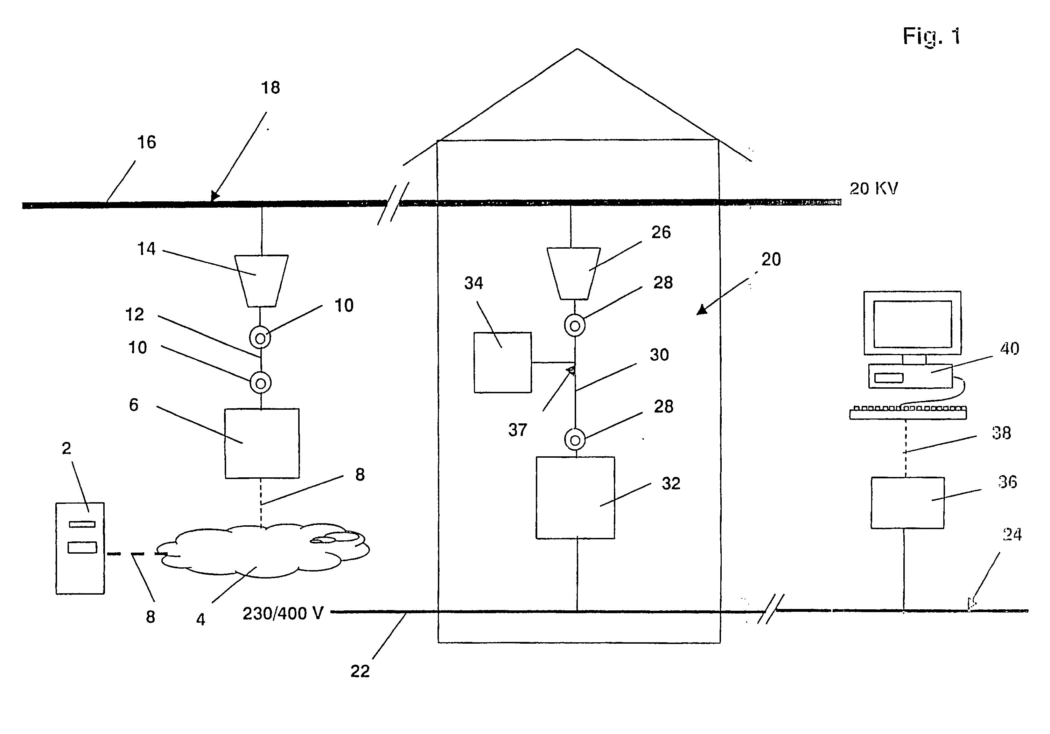

Wie in Fig. 1 dargestellt ist, ist ein Rechner 2, z.B. ein Web-Server, über eine Telekommunikations-Netzwerk 4 mit einer ersten bekannten Powerline-Datenübertragungseinrichtung 6 zum Austausch von elektronischen Daten verbunden, die über Leitungen 8 in Form von Datenpaketen über das Netzwerk 4 übertragen werden, was durch gestrichelte Linien angedeutet ist.

Die erste Powerline-Datenübertragungseinrichtung 6 wandelt die Datenpakete in bekannter Weise in Hochfrequenzsignale um, welche über BNC-Buchsen 10 und zugehörige BNC-Leitungen 12 an eine erste Mittelspannungs-Koppeleinheit 14 übertragen werden, die die Hochfrequenzsignale in die schematisch dargestellten Leitungen 16 eines Mittelspannungs-Stromnetzs 18 einkoppelt, das eine Spannung von z.B. 20 KV aufweist.

Die Hochfrequenzsignale werden über die Leitungen 16 über eine längere Strecke von z.B. 500 m zu einer Trafostation 20 übertragen, in welcher die Mittelspannung von 20 KV durch einen in der Zeichnung nicht dargestellten Transformator auf eine Niederspannung von 230 V oder 400 V herunter transformiert wird, die anschließend über Leitungen 22 eines Niederspannungs-Stromnetzes 24 den einzelnen Haushalten oder Straßenzügen zugeführt wird.

In der Trafostation 20 ist eine zweite Mittelspannungs-Koppeleinheit 26 angeordnet, die die Hochfrequenzsignale aus der Leitung 16 des Mittelspannungs-Stromnetzes auskoppelt. Die ausgekoppelten Hochfrequenzsignale, die einen Signalpegel im Bereich von z.B. einigen Volt besitzen, werden von der zweiten Mittelspannungs-Koppeleinheit 26 über eine BNC-Buchse 28 sowie eine BNC-Leitung 30 an eine erfindungsgemäße Niederspannungs-Einkoppeleinheit 32 übertragen. Die BNC-Leitung 30 ist vorzugsweise ein Koaxialkabel mit einer Impedanz von 50 Ohm. Die Hochfrequenzsignale werden hierbei durch einen Repeater 34 selektiv verstärkt, der mit der BNC-Leitung 30 über ein T-Stück 37 elektrisch verbunden ist.

Die Niederspannungs-Einkoppeleinheit 32 koppelt die durch die BNC-Leitung 30 übertragenen Hochfrequenzsignale in das Niederspannungs-Stromnetz 24 ein, über welches die Signale anschließend zu den einzelnen Haushalten übertragen werden. Dort werden die Hochfrequenzsignale in bekannter Weise durch eine zweite Powerline-Datenübertragungseinrichtung 36 in Form eines bekannten Powerline-Modems zurück in Datenpakete umgewandelt, die über eine Datenleitung 38 an einen Anwender-Rechner 40 zur Weiterverarbeitung übertragen werden.

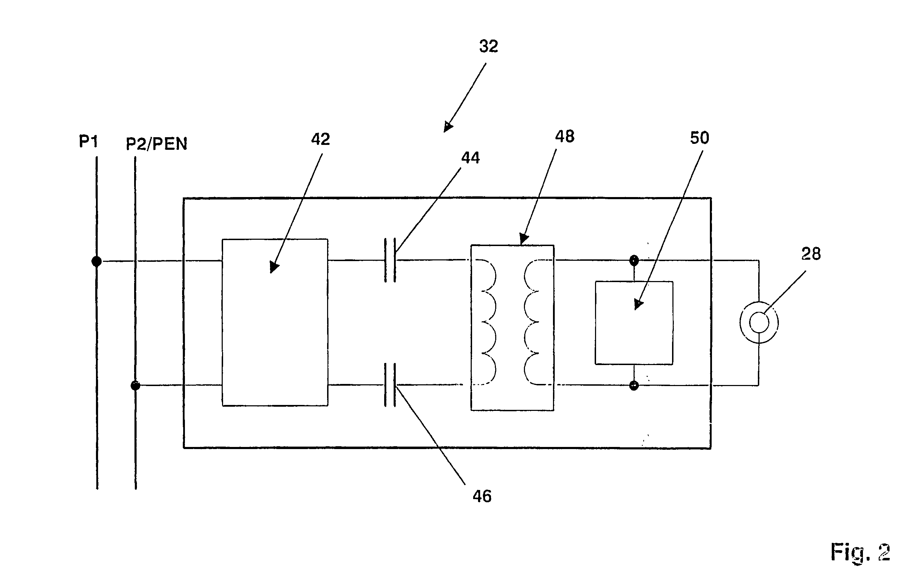

Wie in Fig. 2 gezeigt ist, umfasst die erfindungsgemäße Niederspannungs-Einkoppeleinheit 32 gemäß einer ersten Ausführungsform der Erfindung, bei der das Niederspannungs-Stromnetz 24 lediglich zwei Phasen P1, P2 oder eine Phase P1 und einen kombinierten Schutzleiter/Neutralleiter PEN aufweist, einen Grobschutz 42, der über einen ersten und zweiten Koppelkondensator 44, 46 und einen Übertrager 48 sowie einen diesem nachgeordneten Feinschutz 50 mit der BNC-Buchse 28 verbunden ist, über die die Verbindung mit der zweiten Mittelspannungs-Koppeleinheit 26 hergestellt wird.

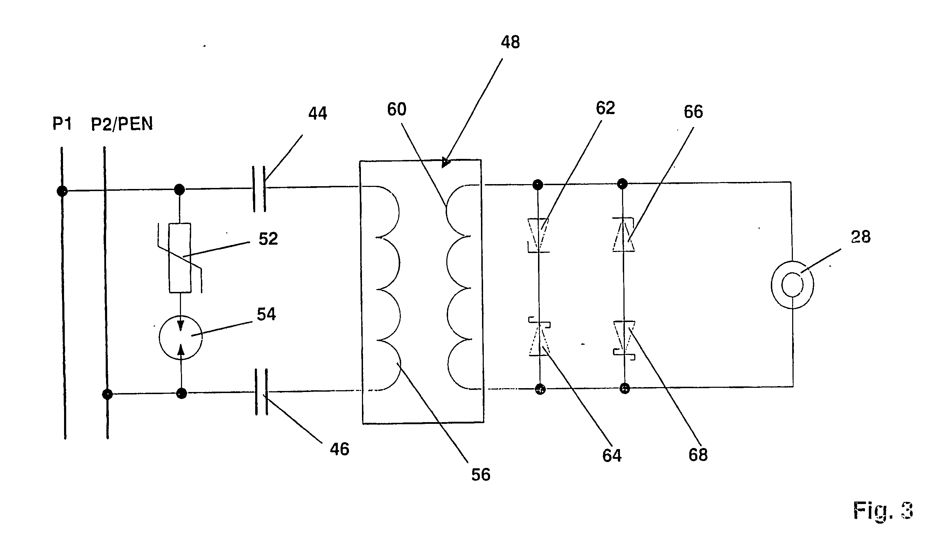

Der Grobschutz 42 enthält gemäß der Darstellung von Fig. 3 einen mit der ersten Phase P1 sowie mit dem ersten Kondensator 44 verbundenen Varistor 52, dem in Reihe ein Überspannungsableiter 54 nachgeschaltet ist, dessen anders Ende mit der zweiten Phase P2, bzw. dem PEN sowie dem zweiten Koppelkondensator 46 elektrisch in Verbindung steht. Die anderen beiden freien Enden des ersten Koppelkondensators 44 und zweiten Koppelkondensators 46 sind mit den beiden Enden einer im Übertrager 48 angeordneten ersten Spule 56 verbunden, die mit einer zweiten Spule 60 im nicht näher bezeichneten Gehäuse des Übertragers 48 untergebracht ist.

Die beiden Enden der zweiten Spule 60 des Übertragers 48 sind elektrisch leitend mit den beiden Anschlüssen der BNC-Buchse 28 verbunden.

Der erste und zweite Koppelkondensator 44, 46 dienen hierbei zusammen mit dem Übertrager 48 als Hochpassfilter für die Hochfrequenzsignale, der die 50 Hz Spannung des Niederspannungsstromnetzes 24 dämpft und von der Seite der zweiten Mittelspannungs-Koppeleinheit 26 , bzw. dem Repeater 34, oder auch einem alternativ angeschlossenen Modem, fernhält, die mit der erfindungsgemäßen Niederspannungs-Einkoppeleinheit 32 vorzugsweise über die BNC-Buchse 28 verbunden sind.

Der Feinschutz 50 enthält eine erste Suppressor-Diode 62 und eine dieser in Reihe nachgeschaltete erste Schottky-Diode 64, die die beiden Enden der zweiten Spule 60 des Übertragers 48 miteinander verbinden. Parallel hierzu, jedoch mit umgekehrter Strom-Durchlassrichtung sind eine zweite Suppressor-Diode 66 und zweite Schottky-Diode 68 in Reihe geschaltet, die ebenfalls mit den beiden Enden der zweiten Spule 60 verbunden sind, um die Überspannungsreste auf unschädliche Werte zu dämpfen.

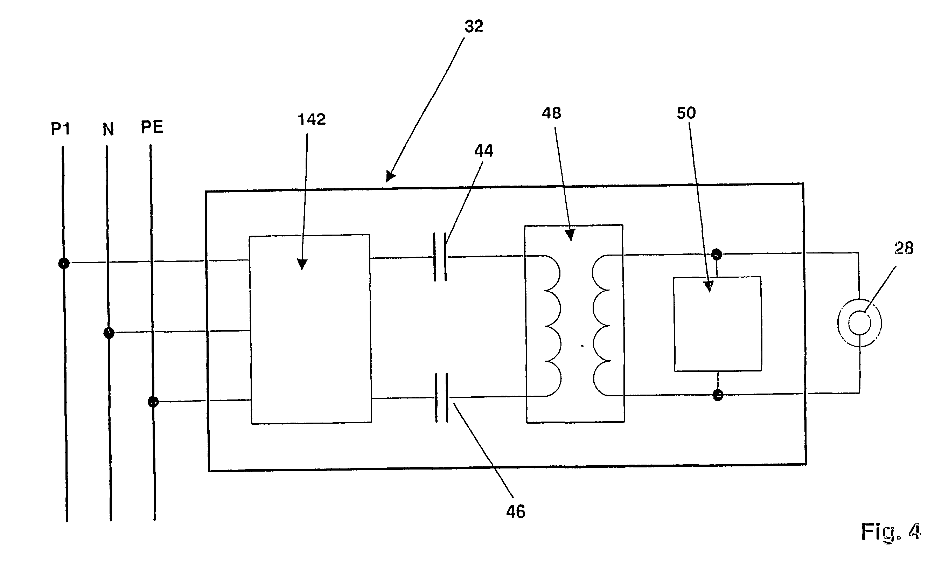

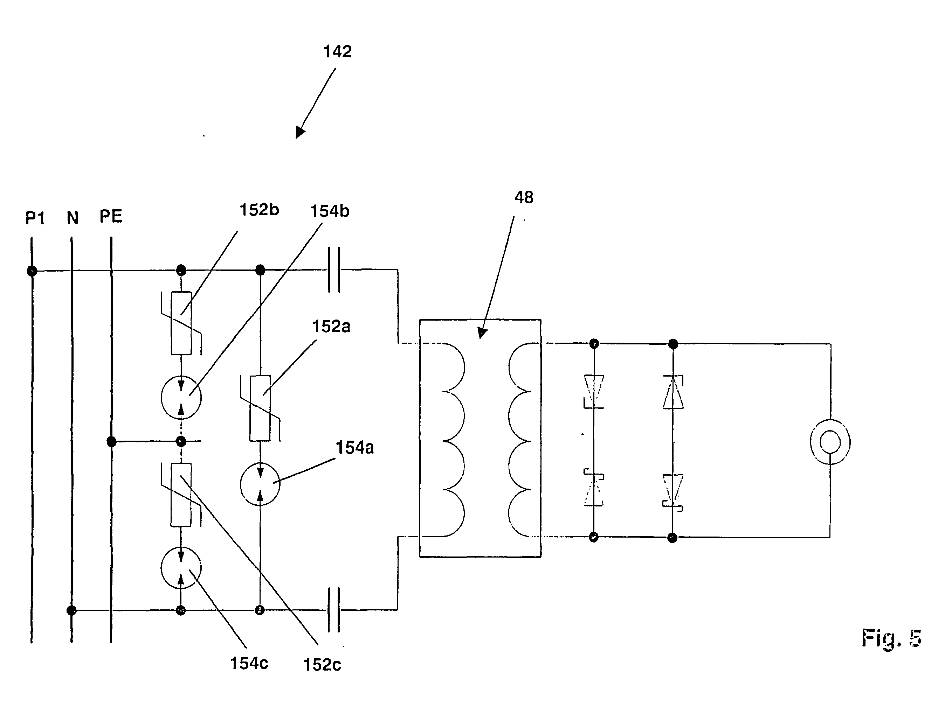

Bei der weiteren, in den Figuren 4 und 5 dargestellten Ausführungsform der Erfindung, bei drei Anschlussleitungen (Phase, Neutralleiter, Schutzleiter) zum Einsatz gelangen, unterscheidet sich vorzugsweise lediglich der Grobschutz 142 in seinem Aufbau von der in in den Figuren 2 und 3 gezeigten Ausführungsform zum Anschluss an zwei Anschlussleitungen P1 und P2/PEN. Die übrigen Bauteile entsprechen denjenigen der Ausführungsform von Fig. 2 und 3 und werden zur Vermeidung von Wiederholungen nicht näher beschrieben.

Wie in Fig. 5 gezeigt ist, sind die Phase P1 und der Neutralleiter N beim Grobschutz 142 über einen ersten Varistor 152a und einen mit diesem in Reihe geschalteten ersten Überspannungsableiter 154a miteinander verbunden. In entsprechender Weise ist der Schutzleiter PE über einen zweiten Varistor 152b und einen mit diesem in Reihe geschalteten Überspannungsableiter 154b mit der Phase P1, und über einen dritten Varistor 152c und einen diesem in Reihe nachgeordneten dritten Überspannungsschutz 154c mit dem Neutralleiter N verbunden. Hierdurch ist jede der drei Anschlussleitungen P1, N, PE über einen Varsitor 152 und nachgeschalteten Überspannungsableiter 154 mit jeder der anderen beiden Anschlussleitungen verbunden, wodurch ein wirkungsvoller Überspannungsschutz geschaffen wird, der z.B. durch Blitzeinschläge etc. im Niederspannungs-Stromnetz 24 hervorgerufene Überspannungen wirksam vom Repeater 34, bzw. von der zweiten Mittelspannungs-Koppeleinheit 26 fernhält.

### Liste der Bezugszeichen

- 2: Rechner
- 4: TK-Netzwerk
- 6: erste Powerline-Datenübertragungseinrichtung
- 8: Leitungen
- 10: BNC-Buchsen
- 12: BNC-Leitungen
- 14: erste Mittelspannung-Koppeleinheit
- 16: Leitungen
- 18: Mittelspannungs-Stromnetz
- 20: Trafostation
- 22: Leitungen
- 24: Niederspannungs-Stromnetz
- 26: zweite Mittelspannungs-Koppeleinheit
- 28: BNC-Buchse
- 30: BNC-Leitung
- 32: Niederspannungs-Einkoppeleinheit
- 34: Repeater/Zwischenverstärker
- 36: zweite Powerline-Datenübertragungseinrichtung
- 37: T-förmige Verbindungsleitung
- 38: Datenleitung
- 40: Anwender-Rechner
- 42: Grobschutz bei Ausführungsform von Fig. 2 und 3
- 44: erster Koppelkondensator
- 46: zweiter Koppelkondensator
- 48: Übertrager
- 50: Feinschutz
- 52: Varistor
- 54: Überspannungsableiter
- 56: erste Spule im Übertrager
- 60: zweite Spule im Übertrager
- 62: erste Suppressor-Diode
- 64: erste Schottky-Diode
- 66: zweite Suppressor-Diode
- 68: zweite Schottky-Diode
- 152a: erster Varistor
- 152b: zweiter Varistor
- 152c: dritter Varistor
- 154a: erster Überspannungsableiter
- 154b: zweiter Überspannungsableiter
- 154c: dritter Überspannungsableiter
- P1: erste Phase
- P2: zweite Phase
- PEN: kombinierter Schutzleiter/Neutralleiter
- PE: Schutzleiter
- N: Neutralleiter

## Patentansprüche

1. Anordnung zur leitungsgebundenen Übertragung von Daten über ein Stromnetzwerk, welches ein Mittelspannspannungs-Stromnetz (18) und ein mit diesem über eine Trafostation (20) gekoppeltes Niederspannungs-Stromnetz (24) umfasst, wobei die Daten über eine erste Powerline-Datenübertragungseinrichtung (6) in Hochfrequenzsignale konvertiert, die Hochfrequenzsignale über eine erste Mittelspannungs-Koppeleinheit (14) in das Mittelspannungs-Stromnetz (18) eingekoppelt, die Hochfrequenzsignale nach ihrer Übertragung über das Mittelspannungs-Stromnetz (18) durch eine zweite Mittelspannungs-Koppeleinheit (26) aus diesem ausgekoppelt und nach ihrer Übertragung über das Niederspannungs-Stromnetz (24) durch eine zweite Powerline-Datenübertragungseinrichtung (36) einem Anwender-Rechner (40) in Form von weiterverarbeitbaren Datenpaketen bereitgestellt werden,
**dadurch gekennzeichnet,**
**dass** eine Niederspannungs-Einkoppeleinheit (32) vorgesehen ist, welche die aus dem Mittelspannungs-Stromnetz (18) ausgekoppelten Hochfrequenzsignale unmittelbar in das Niederspannugs-Stromnetz (24) einkoppelt, ohne diese zuvor in Datenpakete zu konvertieren.

2. Vorrichtung nach Anspruch 1,
**dadurch gekennzeichnet,**
**dass** der Ausgang der Mittelspannungs-Auskoppeleinheit (26) mit einem Zwischenverstärker (34) zur selektiven Verstärkung der den Datenpaketen entsprechenden Hochfrequenzsignale verbunden ist.

3. Vorrichtung nach Anspruch 1 oder 2,
**dadurch gekennzeichnet,**
**dass** der Zwischenverstärker (34) über eine T-förmige Verbindungsleitung (37) mit der zweiten Mittelspannungs-Koppeleinheit (26) verbunden ist.

4. Vorrichtung nach einem der vorhergehenden Ansprüche,
**dadurch gekennzeichnet,**
**dass** die Hochfrequenzsignale zwischen der zweiten Mittelspannungs-Koppeleinheit (26) und der Niederspannungs-Einkoppeleinheit (32) über BNC-Buchsen (28) und ein zugehöriges BNC-Kabel (30) übertragen werden.

5. Vorrichtung nach-einem der vorhergehenden Ansprüche,
**dadurch gekennzeichnet,**
**dass** die Niederspannungs-Einkoppeleinheit (32) einen mit der Phase (P1) des Niederspannungs-Stromnetzes (24) verbundenen Grobschutz (42,142) umfasst.

6. Vorrichtung nach Anspruch 5,
**dadurch gekennzeichnet,**
**dass** der Grobschutz (42) einen Varistor (52, 152) und einen mit diesem in Reihe geschalteten Überspannungsableiter (54, 154) umfasst.

7. Vorrichtung nach Anspruch 5 oder 6,
**dadurch gekennzeichnet,**
**dass** die Niederspannungs-Einkoppeleinheit (32) einen ersten Koppelkondensator (44) umfasst, der mit seinem einen Ende mit einer ersten Phase (P1) des Niederspannungs-Stromnetzes (24) sowie dem Varistor (54,154) verbunden ist.

8. Vorrichtung nach Anspruch 7,
**dadurch gekennzeichnet,**
**dass** die Niederspannungs-Einkoppeleinheit (32) einen zweiten Koppelkondensator (46) umfasst, der mit seinem einen Ende mit einer zweiten Phase (P2) oder dem kombinierten Schutzleiter/Neutralleiter (PEN) des Niederspannungs-Stromnetzes (24) verbunden ist.

9. Vorrichtung nach Anspruch 7 und 8,
**dadurch gekennzeichnet,**
**dass** die Niederspannungs-Einkoppeleinheit (32) einen Übertrager (48) umfasst, der mit den anderen freien Enden des ersten und zweiten Koppelkolldensators (44, 46) zur Bildung eines Hochpassfilters verbunden ist.

10. Vorrichtung nach Anspruch 9,
**dadurch gekennzeichnet,**
**dass** die Niederspannungs-Einkoppeleinheit (32) einen Feinschutz (50) umfasst, der den Übertrager (48) mit der zweiten Mittelspannungs-Koppeleinheit (26) verbindet.

11. Vorrichtung nach Anspruch 2 und 12,
**dadurch gekennzeichnet,**
**dass** die Niederspannungs-Einkoppeleinheit (32) eine BNC-Buchse (28) umfasst, deren Pole elektrisch mit dem Feinschutz (50) verbunden sind.

12. Vorrichtung nach Anspruch 10 oder 11,
**dadurch gekennzeichnet,**
**dass** der Feinschutz (50) eine erste in Reihe geschaltete Suppressordiode (62) und erste Schottky-Diode (64) sowie eine zweite in Reihe geschaltete Suppressordiode (66) und zweite Schottky-Diode (68) umfasst, wobei die Strom-Durchlassrichtungen der ersten und zweiten Suppressordioden (62, 66) entgegengesetzt zueinander verlaufen.

## Claims

1. Arrangement for the line-conducted transmission of data via a power supply system, which comprises a medium-voltage network (18) and a low-voltage network (24) coupled thereto via a transformer station (20), the data being converted into high-frequency signals via a first power line data transmission device (6), the high-frequency signals being injected into the medium-voltage network (18) via a first medium-voltage coupling unit (14), the high-frequency signals, after their transmission via the medium-voltage network (18), being extracted therefrom by a second medium-voltage coupling unit (26) and, after their transmission via the low-voltage network (24), being supplied to a user computer (40) in the form of processable date packets by a second power line data transmission device (36), **characterised in that** a low-voltage injection unit (32) which injects the high-frequency signals extracted from the medium-voltage network (18) directly into the low-voltage network (24), without first converting said high-frequency signals into data packets, is provided.

2. Device according to claim 1, **characterised in that** the output of the medium-voltage extracting unit (26) is connected to a repeater (34) for selectively amplifying the high-frequency signals corresponding to the data packets.

3. Device according to either claim 1 or claim 2, **characterised in that** the repeater (34) is connected to the second medium-voltage coupling unit (26) via a T-shaped connection line (37).

4. Device according to any one of the preceding claims, **characterised in that** the high-frequency signals are transmitted between the second medium-voltage coupling unit (26) and the low-voltage injection unit (32) via BNC jacks (28) and an associated BNC cable (30).

5. Device according to any one of the preceding claims, **characterised in that** the low-voltage injection unit (32) comprises a coarse protection (42, 142) connected to the phase (P1) of the low-voltage network (24).

6. Device according to claim 5, **characterised in that** the coarse protection (42) comprises a varistor (52, 152) and a surge diverter (54, 154) connected in series therewith.

7. Device according to either claim 5 or claim 6, **characterised in that** the low-voltage injection unit (32) comprises a first coupling capacitor (44), which at one of its ends is connected to a first phase (P1) of the low-voltage network (24) and to the varistor (54, 154).

8. Device according to claim 7, **characterised in that** the low-voltage injection unit (32) comprises a second coupling capacitor (46), which at one of its ends is connected to a second phase (P2) or to the combined protective earth conductor/neutral conductor (PEN) of the low-voltage network (24).

9. Device according to claims 7 and 8, **characterised in that** the low-voltage injection unit (32) comprises a transformer (48), which is connected to the other free ends of the first and second coupling capacitors (44, 46) to form a high-pass filter.

10. Device according to claim 9, **characterised in that** the low-voltage injection unit (32) comprises a fine protection (50), which connects the transformer (48) to the second medium-voltage coupling unit (26).

11. Device according to claims 2 and 12, **characterised in that** the low-voltage injection unit (32) comprises a BNC jack (28), the poles of which are electrically connected to the fine protection (50).

12. Device according to either claim 10 or claim 11, **characterised in that** the fine protection (50) comprises a first suppressor diode (62) connected in series and a first Schottky diode (64) as well as a second suppressor diode (66) connected in series and a second Schottky diode (68), the forward direction of the first and second suppressor diodes (62, 66) running in opposite directions to one another.

## Revendications

1. Système de transmission filaire de données par un réseau de courant qui comprend un réseau de courant à moyenne tension (18) et un réseau de courant à basse tension (24) couplé à ce dernier par l'intermédiaire d'une station de transformation (20), les données étant converties en signaux à haute fréquence par l'intermédiaire d'un premier équipement de transmission de données par le secteur (6), les signaux à haute fréquence étant injectés dans le réseau de courant à moyenne tension (18) par l'intermédiaire d'une première unité de couplage à moyenne tension (14), les signaux à haute fréquence, après leur transmission par le réseau à moyenne tension (18), étant découplés de ce dernier par une seconde unité de couplage à moyenne tension (26) et étant transmis par un second équipement de transmission de données par le secteur (36) après leur transmission par le réseau de courant à basse tension (24) à un ordinateur d'application (40) sous forme de paquets de données traitables ultérieurement, **caractérisé en ce qu'**une unité d'injection à basse tension (32) est prévue, qui injecte directement dans le réseau de courant à basse tension (24) les signaux à haute fréquence découplés du réseau de courant à moyenne tension (18), sans convertir ces derniers préalablement en paquets de données.

2. Dispositif suivant la revendication 1, **caractérisé en ce que** la sortie de l'unité de couplage à moyenne tension (26) est reliée à un amplificateur intermédiaire (34) pour l'amplification sélective des signaux à haute fréquence correspondant aux paquets de données.

3. Dispositif suivant l'une des revendications 1 et 2, **caractérisé en ce que** l'amplificateur intermédiaire (34) est relié par une ligne de jonction en forme de T (37) à la seconde unité de couplage à moyenne tension (26).

4. Dispositif suivant l'une des revendications précédentes, **caractérisé en ce que** les signaux à haute fréquence sont transmis entre la seconde unité de couplage à moyenne tension (26) et l'unité d'injection à basse tension (32) par l'intermédiaire de prises BNC (28) et d'un câble BNC (30) correspondant.

5. Dispositif suivant l'une des revendications précédentes, **caractérisé en ce que** l'unité d'injection à basse tension (32) comprend une protection principale (42, 142) reliée à la phase (P1) du réseau de courant à basse tension (24).

6. Dispositif suivant la revendication 5, **caractérisé en ce que** la protection principale (42, 142) comprend un varistor (52, 152) et un parasurtenseur (54, 154) monté en série avec ce dernier.

7. Dispositif suivant l'une des revendications 5 et 6,
**caractérisé en ce que** l'unité d'injection à basse tension (32) comprend un premier condensateur de couplage (44), qui est relié à l'une de ses extrémités à une première phase (P1) du réseau de courant à basse tension (24) ainsi qu'au varistor (54, 154).

8. Dispositif suivant la revendication 7, **caractérisé en ce que** l'unité d'injection à basse tension (32) comprend un second condensateur de couplage (46), qui est relié à l'une de ses extrémités à une seconde phase (P2) ou au conducteur de protection/conducteur neutre combiné (PEN) du réseau de courant à basse tension (24).

9. Dispositif suivant les revendications 7 et 8, **caractérisé en ce que** l'unité d'injection à basse tension (32) comprend un transmetteur (48), qui est relié aux autres extrémités libres du premier et second condensateur de couplage (44, 46) pour former un filtre passe-haut.

10. Dispositif suivant la revendication 9, **caractérisé en ce que** l'unité d'injection à basse tension (32) comprend une protection fine (50), qui relie le translateur (48) à la seconde unité de couplage à moyenne tension (26).

11. Dispositif suivant les revendications 2 et 12, **caractérisé en ce que** l'unité d'injection à basse tension (32) comprend une prise BNC (28), dont les pôles sont reliés électriquement à la protection fine (50).

12. Dispositif suivant l'une des revendications 10 et 11, **caractérisé en ce que** la protection fine (50) comprend une première diode antiparasite (62) et une première diode de Schottky (64) montées en série ainsi qu'une seconde diode antiparasite (66) et une seconde diode de Schottky (68) montées en série, les sens de passage du courant de la première et de la seconde diodes antiparasites (62, 66) étant mutuellement opposés.
